Europäisches Patentamt

**European Patent Office**

**Office européen des brevets**

(19)

(11) Publication number:

**0 166 534**
A1

(12)

# EUROPEAN PATENT APPLICATION

(21) Application number: **85303770.3**

(22) Date of filing: **29.05.85**

(51) Int. Cl.⁴: **F 21 L 11/00, G 08 B 5/38**

(30) Priority: **29.05.84 GB 8413680**

(43) Date of publication of application: **02.01.86**
**Bulletin 86/1**

(84) Designated Contracting States: **AT BE CH DE FR GB IT LI LU NL SE**

(71) Applicant: **INFRATRON (UK) LIMITED, Unit A, 1 Willis Way Fleets Industrial Estate, Poole Dorset BH15 3SS (GB)**

(72) Inventor: **Burrows, Kenneth, 37 Tollerford Road, Canford Heath Poole Dorset (GB)**

(74) Representative: **Topps, Ronald et al, D. YOUNG & CO 10 Staple Inn, London WC1V 7RD (GB)**

(54) **Visual indicator safety device.**

(57) A visual indicator safety device (10) comprising one or more electroluminescent lamp devices (11) secured to a carrier (12) which can be worn by a person, the electroluminescent lamp devices (11) being electrically connected to a DC power supply via a control circuit (13) which includes a power DC/AC converter and an interrupter/flashing circuit which interrupts the power supply to the converter to cause the electroluminescent lamp devices (11) to flash.

1

## VISUAL INDICATOR SAFETY DEVICE

This invention relates to a visual indicator safety device which can be worn by a person in order to provide a visual identification in darkness or bad visibility, such as fog.

According to the present invention there is provided a visual indicator safety device comprising one or more electroluminescent lamp devices secured to a carrier member which can be worn by a person, the or each electroluminescent lamp device being electrically connected to a DC power supply via a control circuit which includes a power DC/AC converter and an interrupter/flashing circuit which when operative interrupts the power supply to the converter to cause the electroluminescent lamp device or devices to flash.

Preferably the DC supply comprises a battery or batteries provided in a container which houses the control circuit and which is attached to the carrier member.

The carrier member may comprise an elongate member which can encircle the person's body. The container may include a reel onto which the elongate carrier member is wound when the device is not in use.

Alternatively the carrier member may comprise a waistcoat or a hat or helmet.

Some embodiments of the invention will now be described, by way of examples, with reference to the accompanying drawings, in which:-

Figure 1 is a diagrammatic perspective view of one embodiment of a visual indicator safety device according to the present invention;

Figure 2 illustrates a person wearing the safety device shown in Figure 1;

Figure 3 is a circuit diagram of a suitable inverter for use in the control circuit of the lamp device;

Figure 4 is a cross-section through an embodiment of an electroluminescent lamp;

Figure 5 is a cross-section through the lamp, plastics envelope and carrier;

Figure 6 is a perspective view of a waistcoat and safety helmet provided with electroluminescent lamp devices in accordance with the invention;

Figure 7 is a front view of a waistcoat showing an alternative lamp layout; and

Figure 8 is a rear view of a waistcoat showing another alternative lamp layout.

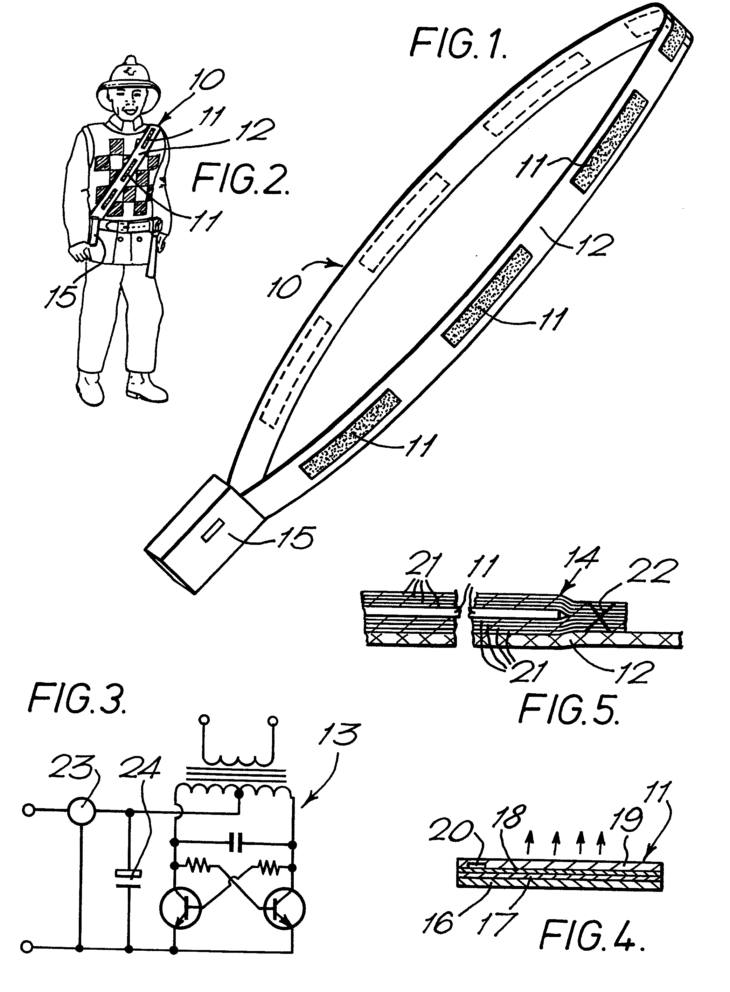

The visual indicator safety device shown in Figures 1 and 2 is generally indicated at 10 and comprises a plurality of electroluminescent lamp devices 11 which are secured to a carrier 12 which in this illustrated embodiment is in the form of a band which can be placed over a persons shoulders and which is long enough to encircle a persons body, as shown in Figure 2. It will be appreciated that the carrier 12 may take many different forms and need not necessarily comprise a band. Also there may be a single electroluminescent lamp device 11 which may extend for the length of the carrier 12. The carrier 12 and lamp 11 assembly can be covered by a reflective material to give additional indication from external lighting, such as vehicle headlights.

The electroluminescent lamp devices 11 are powered from a DC power supply via a control circuit which includes an inverter 13 which is shown in Figure 3 and an interrupter/flashing circuit which interrupts the power supply to the inverter 13 to cause the electroluminescent lamp devices 11 to flash. Preferably the DC power supply comprises a battery or batteries giving a 5 - 12 V DC supply which is inverted/converted to an AC voltage of 110 to 600 volts AC at a frequency of 200 Hz to 2 kHz. An electrical power cut-off/safety device is used to prevent the AC voltage short circuiting. The current limits associated with low battery power prevent a continuous electrical shock situation.

The battery input voltage is pulsed via a control circuit to assist the lighting mode thereby producing easier visibility of the wearer of the device 10.

Each electroluminescent lamp device 11 is in flat form and contained in a plastics envelope 14 which is attached to the carrier 12. Secured to the carrier 12 is a container 15 which contains the DC power supply and the control circuit for the electrical power supplied to the lamp devices 11.

The container 15 will have a manually operated switch for turning the device 10 "on" and "off". The container 15 may also comprise a container for the carrier 12 when the device 10 is not in use. The carrier 12 may be wound onto a reel provided in the container 15.

Safety and integrating of the electrical circuit is maintained by a "shut-down" facility on the output circuit from the inverter 13, in the case of a short circuit, no circuit, open circuit, or similar malfunctions which may expose the wearer to an electrical shock.

The or each electroluminescent lamp device 11 is flexible and as shown in Figure 4, consists of a rear aluminium foil electrode 16 which is preferably 0.002 inches thick, a dielectric resin layer 17 which is preferably 0.001 inches thick, a phosphor resin layer 18 which is preferably 0.001 inches thick and a transparent film layer 19 with I.T.O. coating which is preferably 0.002 inches thick. The lamp device 11 also has a bus-bar 20. The emitted light is in the direction indicated by the arrows in Figure 4.

The plastics envelope 14 (Figure 5) comprises four layers 21 of a fluorohalocarbon transparent film on each side of the electroluminescent lamp 11. A suitable film material is polychlorotrifluoroethylene (P.C.T.F.E.). Each layer 21 is preferably 0.00125 inches thick. The plastics envelope 14 extends beyond the sides of the electroluminescent lamp 11 and is secured to the carrier 12 by stitching or welding 22 or by an adhesive.

The inverter 13 is provided with a regulator 23 and a smoothing capacitor 24. The functioning of the inverter 13 will not be described in detail as this is well known.

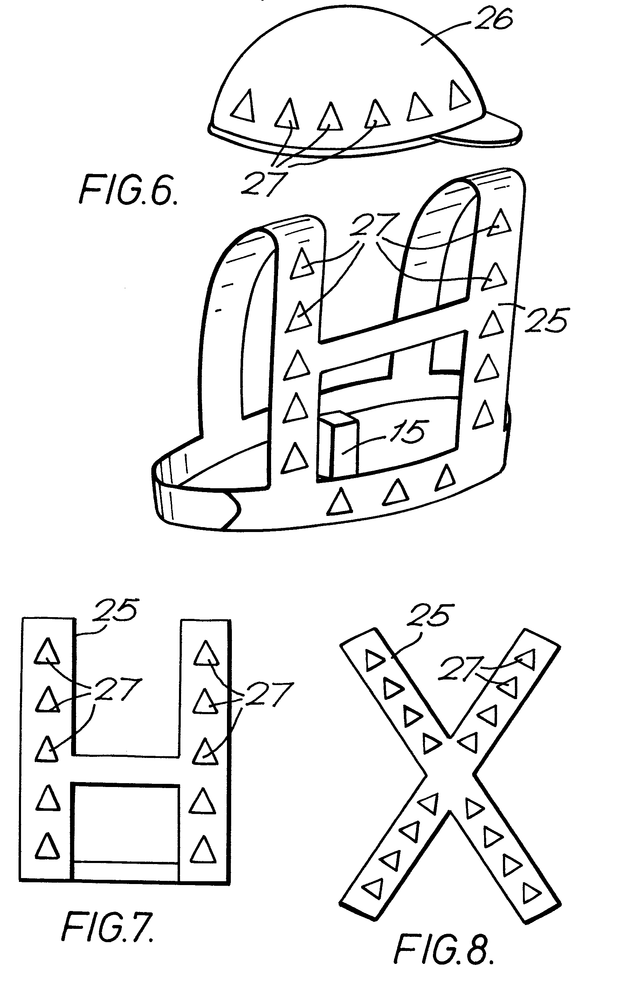

The carrier may take the form of a waistcoat 25 or a helmet 26, as shown in Figure 6. The electroluminescent lamp devices 27 are illustrated as being triangular in plan view but they can have any other desired shape.

Figure 7 illustrates a front view of a waistcoat 25 showing an alternative layout of lamp devices 27 and Figure 8 shows a rear view of a waistcoat 25 with an alternative layout of lamp devices 27.

## CLAIMS

1. A visual indicator safety device (10) comprising one or more electroluminescent lamp devices (11) secured to a carrier member (12) which can be worn by a person, the or each electroluminescent lamp device (11) being electrically connected to a DC power supply via a control circuit (13) which includes a power DC/AC converter and an interrupter/flashing circuit which when operative interrupts the power supply to the converter to cause the electroluminescent lamp device or devices (11) to flash.

2. A visual indicator safety device as claimed in claim 1, in which the DC power supply comprises a battery or batteries provided in a container (15) which houses the control circuit (13) and which is attached to the carrier member (12).

3. A visual indicator safety device as claimed in claim 1 or claim 2, in which the or each electroluminescent lamp device (11) comprises a rear aluminium foil electrode (16) provided on one side with a dielectric resin layer (17) on which is applied a phosphor resin layer (18) covered by a transparent film layer (19).

4. A visual indicator safety device as claimed in any preceding claim, in which the or each lamp device (11) is contained with a plastics envelope (14) attached to the carrier (12).

5. A visual indicator safety device as claimed in claim 4, in which the plastics envelope (14) comprises a plurality of layers of a fluorohalocarbon transparent film on each side of the electroluminescent lamp device (11).

6. A visual indicator safety device as claimed in claim 5, in which the film material is polychlorotrifluoroethylene.

7. A visual indicator safety device as claimed in any preceding claim, in which the carrier member (12) is in the form of a band which can encircle the person's body, or in the form of a helmet (26) or waistcoat (25).

8.      A visual indicator safety device as claimed in any preceding claim, in which the carrier is covered with a light reflective material.

1/2

FIG.1.

FIG.2.

10

11

12

11

11

12

11

11

10

15

15

FIG.3.

FIG.5.

21  11  14  22

21  12

23  24  13

20  18  19  11

16  17

FIG.4.

0166534

FIG.6.

FIG.7.

FIG.8.

**European Patent Office**

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | FR-A-1 463 637 (THE SIMCO)<br><br>* Whole document * | 1-4,7, 8 | F 21 L    11/00<br>G 08 B     5/38 |
| X | BE-A- 654 545 (MADIGAN)<br><br>* Whole document * | 1,2,4, 7 | |
| A | US-A-3 461 522 (VODICKA)<br>* Column 6, lines 19-20 * | 5,6 | |
| | | | **TECHNICAL FIELDS SEARCHED (Int. Cl.4)**<br><br>F 21 L<br>G 08 B<br>H 05 B |

The present search report has been drawn up for all claims

| Place of search | Date of completion of the search | Examiner |
|---|---|---|
| THE HAGUE | 30-08-1985 | FOUCRAY R.B.F. |

CATEGORY OF CITED DOCUMENTS

X : particularly relevant if taken alone
Y : particularly relevant if combined with another document of the same category
A : technological background
O : non-written disclosure

T : theory or principle underlying the invention
E : earlier patent document, but published on, or after the filing date
D : document cited in the application
L : document cited for other reasons

& : member of the same patent family, corresponding document

Form 1503. 03.82